(19) Europäisches Patentamt
European Patent Office
Office européen des brevets

(11) **EP 4 276 712 A1**

(12) **EUROPEAN PATENT APPLICATION**

(43) Date of publication:
**15.11.2023 Bulletin 2023/46**

(21) Application number: **22173335.5**

(22) Date of filing: **13.05.2022**

(51) International Patent Classification (IPC):
***G06N 20/10*** (2019.01)

(52) Cooperative Patent Classification (CPC):
**G06N 20/10**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
• **Lindinger, Jakob
71272 Renningen (DE)**
• **Lippert, Christoph
10247 Berlin (DE)**
• **Rakitsch, Barbara
70193 Stuttgart (DE)**

(54) **METHOD AND THE DEVICE FOR OPERATING A TECHNICAL SYSTEM**

(57) Device and computer-implemented method for machine learning with time-series data representing observations related to a technical system (102), the method comprising providing (200) the time-series data, and model parameters of a distribution over the time-series data and over a first latent variable and over a second latent variable, and variational parameters of an approximate distribution over a second latent variable, sampling (204-1) a value of the second latent variable from the approximate distribution over the second latent variable, finding (204-2) a value of the first latent variable depending on a density of the distribution over the time-series data and over the first latent variable and over the value of the second latent variable, in particular that maximizes the density of the distribution over the time-series data and over the first latent variable and over the value of the second latent variable, determining (204-3) a Hessian depending on a second order Taylor approximation of the distribution over the time-series data and the first latent variable and the value of the second latent variable evaluated at the value of the first latent variable, determining (204-4) a determinant of the Hessian, determining (204-5) a Laplace approximation of a distribution over the time-series data conditioned with the value of the second latent variable depending on the determinant of the Hessian, determining (204-6) an inverse of the Hessian, determining (204-7) a Jacobian of the distribution over the time-series data and the first latent variable and the value of the second latent variable, evaluating (202-1) an approximate lower bound that depends on the Laplace approximations that are determined for a plurality of values of the second latent variable, determining (202-2) gradients of the Laplace approximations depending on the inverse Hessians and the Jacobians, updating (202-3) the model parameters and the variational parameters depending on the gradients

Fig. 2

## Description

Background

The invention relates to a method and device for operating a technical system.

Gaussian process state-space models use Gaussian processes as the transition function in a state-space model to describe time series data in a fully probabilistic manner. These models have two types of latent variables, the temporal states required for modelling noisy sequential observations, and the so-called inducing outputs which are needed to treat the Gaussian process part of the model in an efficient manner.

Ialongo, Alessandro Davide, Mark Van Der Wilk, James Hensman, and Carl Edward Rasmussen. "Overcoming Mean-Field Approximations in Recurrent Gaussian Process Models." International Conference on Machine Learning. 2019 discloses a use of Variational Inference to approximate a true posterior of a Gaussian process model. A conditional dependence of temporal states on the inducing outputs is taken into account and a Markov Gaussian model over the temporal states is assumed. The Markov Gaussian model is parametric and allows for non-linear transitions.

Skaug, Hans Julius and David A. Fournier. "Automatic approximation of the marginal likelihood in non-Gaussian hierarchical models." Comput. Stat. Data Anal. 51, pp. 699-709. 2006 disclose an application of the Laplace approximation to generic, i.e. not Gaussian process, state-space models in an efficient manner. This is possible by using the Implicit Function Theorem and exploiting the sparsity and structure of the Hessian, i.e. a matrix that is needed for applying the Laplace approximation.

Disclosure of the invention

The computer-implemented method and the device according to the independent claims provides a model and a combination of these inference methods by treating two different types of the latent variables in Gaussian process state-space model distinctly and applying variational inference to a Gaussian process part of the model and the Laplace approximation to the temporal states of the model. The distinction of the two types of latent variables makes it possible to process the model efficiently. The method does not require sequential sampling of the temporal states during inference and instead performs the Laplace approximation that involves a joint optimization over those temporal states. This point helps in optimizing the model. The approximate posterior that is used in the model further assumes that dynamics can be locally linearly approximated. The improvements in the optimization that are provided by this model also lead to better calibrated uncertainties for different time-series prediction tasks.

The computer-implemented method for machine learning with time-series data representing observations related to a technical system, comprises providing the time-series data, and model parameters of a distribution over the time-series data and over a first latent variable and over a second latent variable, and variational parameters of an approximate distribution over a second latent variable, sampling a value of the second latent variable from the approximate distribution over the second latent variable, finding a value of the first latent variable depending on a density of the distribution over the time-series data and over the first latent variable and over the value of the second latent variable, in particular that maximizes the density of the distribution over the time-series data and over the first latent variable and over the value of the second latent variable, determining a Hessian depending on a second order Taylor approximation of the distribution over the time-series data and the first latent variable and the value of the second latent variable evaluated at the value of the first latent variable, determining a determinant of the Hessian, determining a Laplace approximation of a distribution over the time-series data conditioned with the value of the second latent variable depending on the determinant of the Hessian, determining an inverse of the Hessian, determining a Jacobian of the distribution over the time-series data and the first latent variable and the value of the second latent variable, evaluating an approximate lower bound that depends on the Laplace approximations that are determined for a plurality of values of the second latent variable, determining gradients of the Laplace approximations depending on the inverse Hessians and the Jacobians, updating the model parameters and the variational parameters depending on the gradients. This method uses a distinction of two types of latent variables, and uses an approximate posterior, and assumes that the dynamics can be locally linearly approximated. This method provides an improved way of doing inference in Gaussian process state-space models. The method has the following advantages: The method does not require sequential sampling of the temporal states during inference and instead performs the Laplace approximation that involves a joint optimization over those temporal states.

Preferably, providing the time-series data comprises receiving the time-series data or receiving a sensor signal comprising information about the technical system and determining the time-series data depending on the sensor signal.

The method preferably comprises determining an instruction for actuating the technical system depending on the time-series data, the model parameters and the variational parameters, and outputting the instruction to cause the technical system to act.

Preferably, the technical system is a computer-controlled machine, like a robot, in particular a vehicle, a domestic appliance, a power tool, a manufacturing machine, a personal assistant or an access control system.

The technical system may comprise an engine or a part thereof, wherein the time-series data comprises as input to the technical system a speed and/or a load, and as output of the technical system an emission, a temperature of the engine, or an oxygen content in the engine.

The technical system may comprise a fuel cell stack or a part thereof, wherein the time-series data comprises as input to the technical system a current in the fuel cell stack, a hydrogen concentration in the fuel cell stack, a stoichiometry of an anode or a cathode of the fuel cell stack, a volume stream of a coolant for the fuel cell stack, an anode pressure for an anode of the fuel cell stack, a cathode pressure for a cathode of the fuel cell stack, an inlet temperature of a coolant for the fuel cell stack, an outlet temperature of a coolant for the fuel cell stack, an anode dew point temperature of an anode of the fuel cell stack, a cathode dew point temperature of a cathode of the fuel cell stack, and as output of the technical system (102) an average of the cell tensions across cells of the fuel cell stack, an anode pressure drop at an anode of the fuel cell stack, a cathode pressure drop at a cathode of the fuel cell stack, a coolant pressure drop between an inlet and an outlet for the coolant of the fuel cell stack, or a coolant temperature rise between an inlet and an outlet for the coolant of the fuel cell stack.

The instruction preferably comprises a target operating mode for the technical system.

The method may comprise determining the determinant of the Hessian depending on a factorization comprising a strictly upper triangular part of a part of the Hessian a strictly lower triangular part of the part of the Hessian and a block diagonal matrix of recursively defined blocks of a matrix. This is a very computing ressource efficient way of determining the Hessian.

The method may comprise determining the inverse of the Hessian depending on a factorization comprising a strictly upper triangular part of a part of the Hessian a strictly lower triangular part of the part of the Hessian and a block diagonal matrix of recursively defined blocks of a matrix. This is a very computing ressource efficient way of determining the inverse of the Hessian.

Evaluating the approximate lower bound may comprise sampling with samples of the second latent variable that are drawn from the approximate distribution over the second latent variable.

The device for machine learning with time-series data representing observations related to a technical system comprises at least one processor and at least one memory, wherein the at least one processor is adapted to execute instructions that when executed by the at least one processor cause the device to perform steps in a method for operating the technical system. This device provides advantages that correspond to the advantages the method provides.

The device may comprises an interface that is adapted to receive information about the technical system and/or that is adapted to output an instruction that causes the technical system to act. This device is capable of interacting with the technical system.

A computer program may comprise computer readable instructions that when executed by a computer cause the computer to perform the steps of the method.

Further advantageous embodiments are derived from the following description and the drawing. In the drawing:

Fig. 1 schematically depicts a device for operating a technical system,
Fig. 2 schematically depicts steps in a method for operating the technical system.

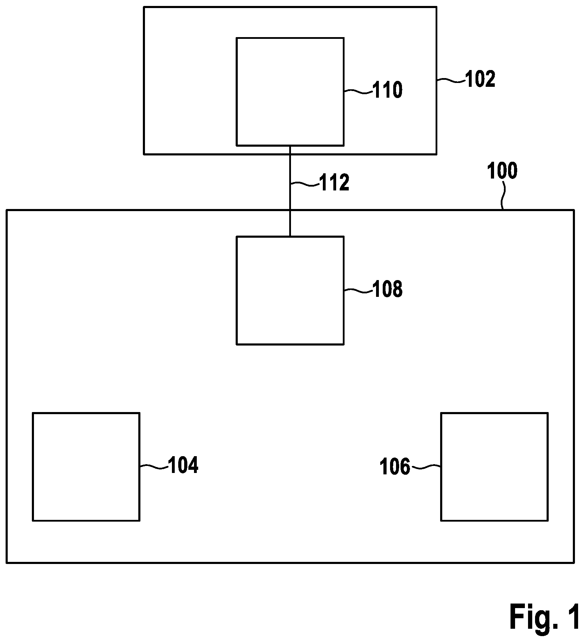

Figure 1 depicts a device 100 for operating a technical system 102 schematically.

The device 100 comprises at least one processor 104 and at least one memory 106. The at least one processor 104 is adapted to execute instructions that when executed by the at least one processor 104 cause the device 100 to perform steps in a method for operating the technical system 102.

The device 100 in the example comprises an interface 108. The interface 108 is for example adapted to receive information about the technical system 102. The interface 108 is for example adapted to output an instruction that causes the technical system 102 to act. The technical system 102 may comprise an actuator 110. The actuator 110 may be connected at least temporarily with the interface 108 via a signal line 112.

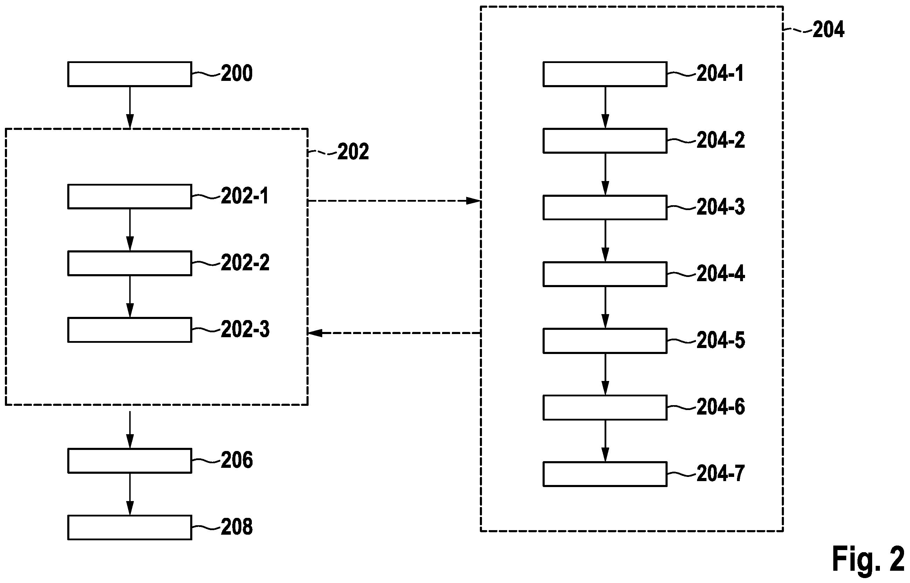

Figure 2 depicts steps of the method. The method comprises analyzing data, e.g. given time-series data $Y_T = \{y_t\}_{t=1}^T$ with $y_t \in \mathbb{R}^{d_y}$ of a given dimension $d_y$, and then operating the technical system 102 accordingly.

The time series data $Y_T$ comprises for example noisy observations from the technical system 102.

In addition to the time series data $Y_T$ the method may consider additional $d_u$ dimensional time series data $U_T$ with $u_t \in R^{du}$.

The technical system 102 may comprise an engine or a part thereof. The time-series data may comprise as input to the technical system 102 a speed and/or a load, and as of the technical system 102 output an emission, a temperature of the engine, or an oxygen content in the engine.

The technical system 102 may comprises a fuel cell stack or a part thereof. The time-series data may comprise as input to the technical system 102 a current in the fuel cell stack, a hydrogen concentration in the fuel cell stack, a stoichiometry of an anode or a cathode of the fuel cell stack, a volume stream of a coolant for the fuel cell stack, an anode pressure for an anode of the fuel cell stack, a cathode pressure for a cathode of the fuel cell stack, an inlet temperature of a coolant for the fuel cell stack, an outlet temperature of a coolant for the fuel cell stack, an anode dew point temperature of an anode of the fuel cell stack, a cathode dew point temperature of a cathode of the fuel cell stack, and as output of the technical system 102 an average of the cell tensions across cells of the fuel cell stack, an anode pressure drop at an anode of the fuel cell stack, a cathode pressure drop at a cathode of the fuel cell stack, a coolant pressure drop between an inlet and an outlet for the coolant of the fuel cell stack, or a coolant temperature rise between an inlet and an outlet for the coolant of the fuel cell stack

The method operates on the given time-series data $Y_T$ for a given number $I$ of iterations $i$ and a given number $N$ of samples $n$.

The method is based on a probabilistic model and an approximate model. The approximate model is based on the fully independent training conditional, FITC, assumption. Details of this assumption are described e.g. in Edward Snelson and Zoubin Ghahramani. Sparse Gaussian Processes using Pseudo-inputs. In Advances in Neural Information Processing Systems, 2005.

The probabilistic model is based on a Gaussian process state-space model wherein a Gaussian process prior is placed on the mean of the transition model that learns the mapping from a latent state $x_{t-1}$ to the next latent state $x_t$:

$$p_\Theta(Y_T, X_{T_0}, F_T) = p_\Theta(x_0)p_\Theta(F_T|X_{T_0})\prod_{t=1}^{T} p_\Theta(y_t|x_t)p_\Theta(x_t|x_{t-1}, f_{t-1})$$

wherein the initial distribution $p_\Theta(x_0)$ and the emission model $p_\Theta(y_t|x_t)$ are left unspecified, and the transition model is given by

$$p_\Theta(x_t|x_{t-1}, f_{t-1}) = N(x_t|x_{t-1} + f_{t-1}, Q)$$

where $N$ is iid. Gaussian noise with variance Q, where $F_T = \{f(x_t)\}_{t=0}^{T-1}$, and wherein in the example, $f{\sim}GP(0, k(\cdot, \cdot))$ is zero-mean Gaussian process, i.e. a distribution over functions that is fully specified by a positive-definite, symmetric kernel $k(\cdot, \cdot) \in \mathbb{R}^{d_x \times d_x} \to \mathbb{R}$.

In case the method considers the additional $d_u$ dimensional time series data $U_T$ with $u_t \in R^{d_u}$ the kernel of the Gaussian process accepts input pairs of dimension $\mathbb{R}^{d_x + d_u}$.

The probabilistic model comprises a first latent variable. The first latent variable is in the example a temporal state $X_{T_0} = \{x_t\}_{t=0}^{T}$ with $x_t \in \mathbb{R}^{d_x}$ of a given dimension $d_x$.

Gaussian Process posteriors can be summarized by sparse Gaussian processes in which the information of the posterior is contained in the pseudo-dataset $(X_M, F_M)$ where $X_M$ are the inducing inputs and $F_M$ are the inducing outputs.

The inducing output $F_M$ and $F_T$ share a joint Gaussian distribution $p_\Theta(F_T, F_M)$. The model employs the fully independent training conditional approximation that assumes independence of the latent GP evaluations given the inducing outputs:

$$p_\Theta(F_T|X_{T_0}, F_M) \approx \prod_{t=1}^{T-1} p_\Theta(f_t|x_t, F_M)$$

that leads to:

$$p_\Theta(Y_T, X_{T_0}, F_M) = p(F_M)p_\Theta(Y_T, X_{T_0}|F_M)$$

with

$$p_\Theta\left(Y_T, X_{T_0} | F_M\right) = p_\theta(x_0) \prod_{t=1}^{T} p_\theta(y_t | x_t) p_\theta(x_t | x_{t-1}, F_M)$$

The inducing output $F_M$ is a second latent variable.

In case the method considers additional $d_u$ dimensional time series data $U_T$ with $u_t \in R^{d_u}$ the inducing points $X_M$ live in that higher dimensional space $\mathbb{R}^{d_x+d_u}$.

The approximate model comprises a distribution over the time-series data $Y_T$ and the first latent variable, e.g. the temporal state $X_{T_0}$, and the second latent variable, e.g. the inducing output $F_M$.

Lower bounding the log marginal log-likelihood $\log p_\Theta(Y_T)$ by variational inference allows finding an approximation to the true posterior over the inducing outputs $p_\Theta(F_M | Y_T)$:

$$\log p_\theta(Y_T) \geq \int q_\Psi(F_M) \log p_\theta(Y_T | F_M) dF_M - KL(q_\Psi(F_M) \| p_\theta(F_M)),$$

where $p_\theta(Y_T|F_M) = \int p_\theta(Y_T, X_{T_0}|F_M) dX_{T_0}$.

The approximate model comprises an approximate distribution over the second latent variable, e.g. a variational distribution $q_\Psi(F_M) = N(F_M | m, S)$ over the inducing output $F_M$ with mean m and variance S. These are e.g. given initial variational parameters $\Psi = \{m, S\}$.

For every inducing input $X_M = \{x_m\}_{m=0}^{M}$ with $x_m \in \mathbb{R}^{d_x}$ with the inducing output $F_M$ is distributed according to a given approximate distribution $q_\Psi(F_M)$ over the inducing output $F_M$.

The inducing input $X_M$ and the inducing output $F_M$ are referred to as pseudo data point. The prior over the inducing outputs is given by the Gaussian process prior

$$p(F_M) = N(F_M | 0, K_{MM}), \text{ where } K_{MM} = \{k(x_m, x_{m'})\}_{m,m'=1}^{M}.$$

The approximate model comprises a predictive distribution $p(x_t | x_{t-1}, F_M) = N(x_t | x_{t-1} + \mu(x_{t-1}, F_M), \Sigma(x_{t-1}) + Q)$, where the mean is given by $\mu(x_t, F_M) = K_{tM} K_{MM}^{-1} F_M$ and the covariance is given by $\Sigma(x_t) = k_{tt} - K_{tM} K_{MM}^{-1} K_{tM}^T$, wherein $k_{tt} = k(x_t, x_t)$ and $K_{tM} = \{k(x_t, x_m)\}_{m=1}^{M}$.

The method comprises a step 200.

The step 200 comprises providing the time series data $Y_T$. The time series data $U_T$ may be provided and used additionally.

The method may comprise receiving the time series data $Y_T$ at the interface 108. Step 200 may comprise receiving a sensor signal comprising information about the technical system 102 and determining the time-series data $Y_T$ depending on the sensor signal. The time series data $U_T$ may be received or determined from a received sensor signal additionally. The time series data $u_t$ is for example concatenated with the latent state $x_t$ and used as input to the transition model and kernel function.

The step 200 comprises providing a given true distribution $p_\Theta(Y_T, X_{T_0} | F_M)$ over time-series data $Y_T$ and the latent states $X_{T_0}$ that is conditioned on an inducing output $F_M$. This means, providing a distribution over the time-series data $Y_T$ and the first latent variable $X_{T_0}$ and the second latend variable $F_M$.

The method operates with given initial model parameters $\Theta$ and the given initial variational parameters $\Psi = \{m, S\}$.

The method comprises an outer loop 202 and an inner loop 204.

The outer loop 202 is processed for iterations i = 1, ...,I. In the iterations, the model and variational parameters are optimized.

The inner loop 204 is processed for samples $n$ = 1, ...,N. The samples are used to obtain a stochastic approximation to the log-likelihood.

The inner loop 204 comprises a step 204-1.

The step 204-1 comprises sampling a value of the second latent variable from the approximate distribution over the second latent variable.

In the example, an inducing output sample $F_M^{(n)}$ is determined from the distribution $q_\psi(F_M)$ over the inducing output $F_M$:

$$F_M^{(n)} \sim q_\psi(F_M)$$

The inner loop 204 comprises a step 204-2.

The step 204-2 comprises finding a value of the first latent variable depending on the density of the distribution over the time-series data and the first latent variable and the value of the second latent variable. In the example, step 204-2 comprises finding a value of the first latent variable for that the density of the distribution over the time-series data and the first latent variable and the value of the second latent variable is maximized.

In the example, a mode $\hat{X}^{(n)}_{T_0}$ is found that is a maximizer of a logarithmic density

$$g_{GP}\left(X_{T_0}, \Theta, F_M\right) = \log p_\Theta\left(Y_T, X_{T_0} | F_M^{(n)}\right)$$

with respect to the latent states $X_{T_0}$,

$$\hat{X}^{(n)}_{T_0} = argmax_{X_{T_0}} g_{GP}\left(X_{T_0}, \Theta, F_M^{(n)}\right)$$

This means, the method comprises finding a mode $\hat{X}^{(n)}_{T_0}$ that maximizes the logarithmic density.

The inner loop 204 comprises a step 204-3.

The step 204-3 comprises determining a Hessian of the the logarithmic density $g_{GP}\left(X_{T_0}, \Theta, F_M^{(n)}\right)$ depending on a mode of first latent variable $\hat{X}_{T_0}$ the model parameters $\Theta$, and the value of the second latent variable $F_M^{(n)}$.

In the example, non-zero elements of a Hessian $H(A_t, B_t) \in \mathbb{R}^{d_x(T+1) \times d_x(T+1)}$ are obtained, wherein

$$A_t = - \left. \frac{\partial^2 g_{GP}\left(X_{T_0}, \Theta, F_M^{(n)}\right)}{\partial x_t \partial x_t} \right|_{X_{T_0} = \hat{X}_{T_0}} \in \mathbb{R}^{d_x \times d_x}$$

$$B_t = - \left. \frac{\partial^2 g_{GP}\left(X_{T_0}, \Theta, F_M^{(n)}\right)}{\partial x_t \partial x_{t-1}} \right|_{X_{T_0} = \hat{X}_{T_0}} \in \mathbb{R}^{d_x \times d_x}$$

In the example the non-zero elements comprise the quantities $\{A_t\}_{t=1}^T$ and $\{B_t\}_{t=1}^T$. The Hessian is used to provide a second order Taylor approximation of $g_{GP}\left(X_{T_0}, \Theta, F_M^{(n)}\right)$ around the mode $\hat{X}_{T_0}$. Note that $Y_T$ is constant.

In the example, the non-zero elements of the Hessian are determined with only $3d_x$ vector-Hessian products, reducing the memory and time requirements to $O(Td_x^2)$.

The inner loop 204 comprises a step 204-4.

The step 204-4 comprises determining a determinant of the Hessian.

The determinant of the Hessian is determined for example depending on a factorization comprising a strictly upper triangular part of a part of the Hessian a strictly lower triangular part of the part of the Hessian and a block diagonal matrix of recursively defined blocks of a matrix.

In the example, a determinant det $H(A_t,B_t)$ of the Hessian $H(A_t,B_t)$ is evaluated.

In the example, the determinant *det $H(A_t, B_t)$* of the Hessian *$H(A_t, B_t)$* is determined from a factorization

$$H(A_t, B_t) = (\Lambda + B^T)\Lambda^{-1}(\Lambda + B)$$

wherein *B* is the strictly upper triangular part of the Hessian *$H(A_t, B_t)$* comprising of the different $B_t$ and $\Lambda$ is a block diagonal matrix of recursively defined blocks:

$$\Lambda_0 = A_0, \qquad \Lambda_t = A_t - B_t^T \Lambda_{t-1}^T B_t, \qquad t = 1, \dots, T$$

as

$$\det H(A_t, B_t) = \prod_{t=0}^{T} det\Lambda_t$$

wherein $\Lambda_t$ is a block diagonal matrix and $B_t$ is strictly upper triangular and $B_t^T$ is strictly lower triangular. These operations can be performed in $O(Td_x^3)$ steps.

The inner loop 204 comprises a step 204-5.

The step 204-5 comprises determining a Laplace approximation of a distribution over the time-series data conditioned with the value of the second latent variable depending on the determinant of the Hessian.

In the example, a Laplace approximation $\tilde{p}_\Theta\left(Y_T | F_M^{(n)}\right)$ of a conditional $p_\Theta\left(Y_T | F_M^{(n)}\right)$ is evaluated:

$$\tilde{p}_\Theta\left(Y_T | F_M^{(n)}\right) \propto p_\Theta\left(Y_T, \hat{X}^{(n)}_{T_0} | F_M^{(n)}\right) \det\left(H(A_t, B_t)\right)^{-1/2}$$

The inner loop 204 comprises a step 204-6.

The step 204-6 comprises determining an inverse of the Hessian.

The inverse of the Hessian is determined for example depending on the factorization comprising the strictly upper triangular part of the part of the Hessian the strictly lower triangular part of the part of the Hessian and the block diagonal matrix of recursively defined blocks of the matrix.

In the example, the inverse $H^{-1}$ of the Hessian H is determined.

The inverse of the Hessian is determined from the factorization.

$$H^{-1} = (\Lambda + B)^{-1}\Lambda(\Lambda + B^T)^{-1}$$

The inner loop 204 comprises a step 204-7.

The step 204-7 comprises determining a Jacobian of the distribution over the time-series data and the first latent variable and the value of the second latent variable.

In the example, a Jacobian *h* of the function $g_{GP}\left(X_{T_0}, \Theta, F_M^{(n)}\right)$ is determined:

$$h\left(\hat{X}_{T_0}^{(n)}, \Theta, F_M^{(n)}\right) = -\frac{\partial \log p_\Theta\left(Y_T, X_{T_0} \middle| F_M^{(n)}\right)}{\partial X_{T_0}}\Bigg|_{\hat{X}_{T_0}^{(n)} = x}$$

The outer loop 202 comprises a step 202-1.

The step 202-1 comprises evaluating an approximate lower bound that depends on the Laplace approximations that are determined for a plurality of values of the second latent variable.

In the example, an approximate lower bound $L(\Theta, \Psi)$

$$L(\Theta, \Psi) = \int q_\Psi(F_M) \log \tilde{p}_\Theta(Y_T | F_M) dF_M - KL(q_\Psi(F_M) \| p_\Theta(F_M))$$

is evaluated, that comprises a Kullback-Leibler term, KL-term, for comparing the approximate distribution $q_\Psi(F_M)$ with the true posterior distribution $p_\Theta(F_M)$. The distribution $\tilde{p}_\Theta(Y_T | F_M)$ is given by the Laplace approximation around $\hat{X}_{T_0}$.

In the example, the plurality of values of the second latent variable are the samples of the second latent variable that are determined in step 204-1 when processing the inner loop repeatedly. This means, the approximate lower bound is evaluated depending on samples of the second latent variable that are drawn from the approximate distribution over the second latent variable.

In the example, in order to evaluate and optimize this optimization objective, a parametric family is chosen for the approximate distribution $q_\Psi(F_M)$.

In the example, $q_\Psi(F_M)$ is a Gaussian distribution. This allows an analytical evaluation of the KL-term. The other term of $L(\Theta, \Psi)$ is analytically intractable. In the example the other term is optimized by sampling:

$$\int q_\Psi(F_M) \log \tilde{p}_\Theta(Y_T | F_M) dF_M \approx \sum_{n=1}^{N} \log \tilde{p}_\Theta \left( Y_T | F_M^{(n)} \right)$$

with samples of inducing outputs $F_M^{(n)}$ that are drawn from the approximate distribution $q_\Psi(F_M)$ over the inducing output $F_M$.

$$F_M^{(n)} \sim q_\Psi(F_M)$$

The outer loop 202 comprises a step 202-2.

The step 202-2 comprises determining gradients of the Laplace approximations depending on the inverse Hessians and the Jacobians.

In the example, gradients $\dfrac{\partial L(\Theta, \Psi)}{\partial \Theta}$ and $\dfrac{\partial L(\Theta, \Psi)}{\partial \Psi}$ of $L(\Theta, \Psi)$ are obtained using

$$\frac{\partial \hat{X}_{T_0}^{(n)}}{\partial \Theta} = H^{-1}\left(\Theta, F^{(n)}{}_M\right) \frac{\partial h\left(\hat{X}_{T_0}^{(n)}, \Theta, F^{(n)}{}_M\right)}{\partial \Theta}$$

and

$$\frac{\partial \hat{X}_{T_0}^{(n)}}{\partial \Psi} = H^{-1}\left(\Theta, F^{(n)}{}_M\right) \frac{\partial h\left(\hat{X}_{T_0}^{(n)}, \Theta, F_M^{(n)}\right)}{\partial \Psi}$$

wherein $\Psi$ are the variational parameters that enter the equation implicitly over the sampled inducing outputs $F_M^{(n)}$.

This exchanges a potentially costly automatic differentiation computations with a Hessian solve. This requires only the value $\hat{X}_{T_0}^{(n)}$ so that the complete computational graph of how it has been obtained is no longer required.

The outer loop 202 comprises a step 202-3.

The step 202-3 comprises updating the model parameters and variational parameters depending on the gradients.

In the example, the model parameters $\Theta$ and variational parameters $\Psi = \{m,S\}$ are updated.

Updating the model parameters $\Theta$ and the variational parameters $\Psi = \{m,S\}$ comprises determining the model parameters $\Theta$ and variational parameters $\Psi = \{m,S\}$ for that minimize $L(\Theta, \Psi)$. This means, the model parameters $\Theta$ and variational parameters $\Psi = \{m,S\}$ are determined for that $L(\Theta, \Psi)$ is smaller than for other model parameters $\Theta$ and variational parameters $\Psi = \{m,S\}$.

The aforementioned steps of the method describe an inference method to learn the model parameters $\Theta$ and variational parameters $\Psi$ of a Gausssian process state space model in a training. These steps may be determined in an offline phase, e.g. for given time-series data $Y_T$ and optionally given additional time series data $U_T$.

The following steps of the method may be executed for a prediction e.g. in an online phase. These steps may be executed with a trained model, i.e. with given model parameters $\Theta$ and variational parameters $\Psi$. These steps may be executed independently of the training, i.e. without training, or jointly with the training after the training.

In the example, the model parameters $\Theta$ and variational parameters $\Psi$ that are determined in a last iteration of updating the model parameters $\Theta$ and variational parameters $\Psi$ are used for the prediction.

The method may comprise a step 206.

In the step 206, the method comprises determining an instruction for actuating the technical system 102 depending on the time-series data $Y_T$, the model parameters $\Theta$ and the variational parameters $\Psi = \{m,S\}$.

Optionally the additional time series data $U_T$ may be used as well.

For example, the time-series data comprises as input to the approximate model of the technical system 102 a speed and/or a load. For example, the output of the approximate model of the technical system 102 is an emission, a temperature of the engine, or an oxygen content in the engine.

For example, the time-series data comprises as input to the approximate model of the technical system 102 a current in the fuel cell stack, a hydrogen concentration in the fuel cell stack, a stoichiometry of an anode or a cathode of the fuel cell stack, a volume stream of a coolant for the fuel cell stack, an anode pressure for an anode of the fuel cell stack, a cathode pressure for a cathode of the fuel cell stack, an inlet temperature of a coolant for the fuel cell stack, an outlet temperature of a coolant for the fuel cell stack, an anode dew point temperature of an anode of the fuel cell stack, a cathode dew point temperature of a cathode of the fuel cell stack. For example, the output of the approximate model of the technical system 102 is an average of the cell tensions across cells of the fuel cell stack, an anode pressure drop at an anode of the fuel cell stack, a cathode pressure drop at a cathode of the fuel cell stack, a coolant pressure drop between an inlet and an outlet for the coolant of the fuel cell stack, or a coolant temperature rise between an inlet and an outlet for the coolant of the fuel cell stack.

The instruction for example comprises a target operating mode for the technical system 102. The target operating mode may be determined depending on the output of the approximate model, e.g. by a controller or a characteristic curve or a map that maps the output to the target operating mode.

The method may comprise a step 208.

In the step 208, the method comprises outputting the instruction to cause the technical system 102 to act.

The instruction for example comprises the target operating mode for the technical system 102.

The time series data $Y_T$ may be processed in the training in minibatches. A minibatch is a subsequence

$$Y_b = \{y_t\}_{t=t_0}^{t_0+T_b}$$ of the time series data $Y_T$ of length $T_b$ and starting at an arbitrary time index $t_0$. The method may be applied to minibatches. The method may comprise drawing a minibatch for a sample from the approximate distribution $q_\psi(F_M)$ and approximate the term

$$\int q_\Psi(F_M) \log \tilde{p}_\Theta(Y_T|F_M) dF_M \approx \frac{T}{T_b} \sum_{n=1}^{N} \log \tilde{p}_\Theta\left(Y_{T_b}^{(n)}|F_M^{(n)}\right), F_M^{(n)} \sim q_\Psi(F_M)$$

The method is applied to one-dimensional or multidimensional latent states $x_t$ alike. For multi-dimensional latent states $x_t$ an independent Gaussian process may be used for each dimension of the latent state $x_t$:

$$p_\Theta\left(x_t|x_{t-1}, F_M^{d_x}\right) = \prod_{d=1}^{d_x} N\left(x_t^{(d)}\Big|x_{t-1}^{(d)} + \mu^{(d)}\left(x_{t-1}, F_M^{(d)}\right), q_d + \Sigma^{(d)}(x_{t-1})\right)$$

$$F_M^{d_x} = \left\{ F_M^{(d)} \right\}_{d=1}^{d_x}$$

where $F_M^{d_x} = \left\{ F_M^{(d)} \right\}_{d=1}^{d_x}$ is a collection of all inducing outputs, $x_t^{(d)}$ is the d-th dimension of the latent state and $\mu^{(d)}$ is the mean and $\sum^{(d)}$ is the covariance of the Gaussian process of the d-th dimension.

**Claims**

1. Computer-implemented method for machine learning with time-series data representing observations related to a technical system (102), **characterized by** providing (200) the time-series data, and model parameters of a distribution over the time-series data and over a first latent variable and over a second latent variable, and variational parameters of an approximate distribution over a second latent variable, sampling (204-1) a value of the second latent variable from the approximate distribution over the second latent variable, finding (204-2) a value of the first latent variable depending on a density of the distribution over the time-series data and over the first latent variable and over the value of the second latent variable, in particular that maximizes the density of the distribution over the time-series data and over the first latent variable and over the value of the second latent variable, determining (204-3) a Hessian depending on a second order Taylor approximation of the distribution over the time-series data and the first latent variable and the value of the second latent variable evaluated at the value of the first latent variable, determining (204-4) a determinant of the Hessian, determining (204-5) a Laplace approximation of a distribution over the time-series data conditioned with the value of the second latent variable depending on the determinant of the Hessian, determining (204-6) an inverse of the Hessian, determining (204-7) a Jacobian of the distribution over the time-series data and the first latent variable and the value of the second latent variable, evaluating (202-1) an approximate lower bound that depends on the Laplace approximations that are determined for a plurality of values of the second latent variable, determining (202-2) gradients of the Laplace approximations depending on the inverse Hessians and the Jacobians, updating (202-3) the model parameters and the variational parameters depending on the gradients.

2. The method according to claim 1, **characterized in that** providing (200) the time-series data comprises receiving the time-series data or receiving a sensor signal comprising information about the technical system (102) and determining the time-series data depending on the sensor signal.

3. The method according to claim 1, **characterized by** determining (206) an instruction for actuating the technical system (102) depending on the time-series data, the model parameters and the variational parameters, and outputting (208) the instruction to cause the technical system (102) to act.

4. The method according to one of the previous claims, **characterized in that** the technical system (102) is a computer-controlled machine, like a robot, in particular a vehicle, a domestic appliance, a power tool, a manufacturing machine, a personal assistant or an access control system.

5. The method according to one of the previous claims, **characterized in that** the technical system (102) comprises an engine or a part thereof, wherein the time-series data comprises as input to the technical system (102) a speed and/or a load, and as output of the technical system (102) an emission, a temperature of the engine, or an oxygen content in the engine.

6. The method according to one of the previous claims, **characterized in that** the technical system (102) comprises a fuel cell stack or a part thereof, wherein the time-series data comprises as input to the technical system (102) a current in the fuel cell stack, a hydrogen concentration in the fuel cell stack, a stoichiometry of an anode or a cathode of the fuel cell stack, a volume stream of a coolant for the fuel cell stack, an anode pressure for an anode of the fuel cell stack, a cathode pressure for a cathode of the fuel cell stack, an inlet temperature of a coolant for the fuel cell stack, an outlet temperature of a coolant for the fuel cell stack, an anode dew point temperature of an anode of the fuel cell stack, a cathode dew point temperature of a cathode of the fuel cell stack, and as output of the technical system (102) an average of the cell tensions across cells of the fuel cell stack, an anode pressure drop at an anode of the fuel cell stack, a cathode pressure drop at a cathode of the fuel cell stack, a coolant pressure drop between an inlet and an outlet for the coolant of the fuel cell stack, or a coolant temperature rise between an inlet and an outlet for the coolant of the fuel cell stack.

7. The method according to one of the previous claims, **characterized in that** the instruction comprises a target operating mode for the technical system (102).

8. The method according to one of the previous claims, **characterized by** determining (204-4) the determinant of the Hessian depending on a factorization comprising a strictly upper triangular part of a part of the Hessian a strictly lower triangular part of the part of the Hessian and a block diagonal matrix of recursively defined blocks of a matrix.

9. The method according to one of the previous claims, **characterized by** determining (204-6) the inverse of the Hessian depending on a factorization comprising a strictly upper triangular part of a part of the Hessian a strictly lower triangular part of the part of the Hessian and a block diagonal matrix of recursively defined blocks of a matrix.

10. The method according to one of the previous claims, **characterized in that** evaluating (202-1) the approximate lower bound comprises sampling with samples of the second latent variable that are drawn from the approximate distribution over the second latent variable.

11. Device (100) for machine learning with time-series data representing observations related to a technical system (102), **characterized in that** the device (100) comprises at least one processor (104) and at least one memory (106), wherein the at least one processor (104) is adapted to execute instructions that when executed by the at least one processor (104) cause the device (100) to perform steps in a method for operating the technical system (102).

12. The device (100) according to claim 11, **characterized in that** the device (100) comprises an interface (108) that is adapted to receive information about the technical system (102) and/or that is adapted to output an instruction that causes the technical system (102) to act.

13. Computer program, **characterized in that** the computer program comprises computer readable instructions that when executed by a computer cause the computer to perform the steps of the method according to one of the claims 1 to 12.

110

102

100

112

108

104

106

Fig. 1

Fig. 2

Europäisches
Patentamt

European
Patent Office

Office européen
des brevets

# EUROPEAN SEARCH REPORT

Application Number

EP 22 17 3335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/011447 A1 (NGUYEN-TUONG THE DUY [DE] ET AL) 14 January 2021 (2021-01-14) * paragraph [0007] * * paragraph [0012] – paragraph [0016] * * paragraph [0057] – paragraph [0058] * ----- | 1-13 | INV. G06N20/10 |
| A | EP 3 716 160 A1 (BOSCH GMBH ROBERT [DE]) 30 September 2020 (2020-09-30) * paragraph [0011] – paragraph [0016] * ----- | 1-13 | |

TECHNICAL FIELDS
SEARCHED      (IPC)

G06N

The present search report has been drawn up for all claims

| Place of search | Date of completion of the search | Examiner |
|---|---|---|
| Munich | 2 November 2022 | Herri, Edmond |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
........................................................................
& : member of the same patent family, corresponding
    document

EPO FORM 1503 03.82 (P04C01)

**EP 4 276 712 A1**

## ANNEX TO THE EUROPEAN SEARCH REPORT
## ON EUROPEAN PATENT APPLICATION NO.

EP 22 17 3335

02-11-2022

| Patent document cited in search report | | Publication date | Patent family member(s) | | Publication date |
|---|---|---|---|---|---|
| US 2021011447 | A1 | 14-01-2021 | CN | 111971628 A | 20-11-2020 |
| | | | DE | 102018201411 A1 | 01-08-2019 |
| | | | EP | 3746850 A1 | 09-12-2020 |
| | | | US | 2021011447 A1 | 14-01-2021 |
| | | | WO | 2019149664 A1 | 08-08-2019 |
| EP 3716160 | A1 | 30-09-2020 | CN | 111753952 A | 09-10-2020 |
| | | | EP | 3716160 A1 | 30-09-2020 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **IALONGO, ALESSANDRO DAVIDE ; MARK VAN DER WILK ; JAMES HENSMAN ; CARL EDWARD RASMUSSEN.** Overcoming Mean-Field Approximations in Recurrent Gaussian Process Models. *International Conference on Machine Learning,* 2019

- **SKAUG, HANS JULIUS ; DAVID A. FOURNIER.** Automatic approximation of the marginal likelihood in non-Gaussian hierarchical models. *Comput. Stat. Data Anal.,* 2006, vol. 51, 699-709